# EUROPEAN PATENT SPECIFICATION

(11) **EP 0 932 956 B1**
(45) Date of publication and mention of the grant of the patent: **13.07.2005**
(21) Application number: 97909803.5
(22) Date of filing: 14.10.1997
(51) Int. Cl.: H04L 9/32, G06F 1/00, H04L 29/06

(54) **TRANSFER OF SIGNED AND ENCRYPTED INFORMATION**
ÜBERTRAGUNG EINER UNTERSCHRIEBENEN UND VERSCHLÜSSELTEN INFORMATION
TRANSFERT D'INFORMATIONS SIGNEES ET CRYPTEES

(30) Priority: 17.10.1996 SE 9603825
(43) Date of publication of application: 04.08.1999
(73) Proprietor: TELIA AB, 123 86 Farsta (SE)
(72) Inventor: SVENSSON, Claes, S-753 36 Uppsala (SE); SVENSSON, Anders, S-740 20 VAENGE (SE)
(74) Representative: Akerman, Marten Lennart
(86) International application number: PCT/SE1997/001713
(87) International publication number: WO 1998/017029

(56) References cited:
- EP-A- 0 683 582
- US-A- 5 568 554
- US-A- 5 590 197
- US-A- 5 590 199
- "Internet image statements" IBM TECHNICAL DISCLOSURE BULLETIN, vol. 39, no. 10, October 1996 (1996-10), pages 43-45, XP000631318
- "Proceedings of the third international conference on parallel and distributed information systems" October 1994 (1994-10), , AUSTIN , US * page 99 - page 102 *

## Description

### FIELD OF THE INVENTION

The present invention relates to a device and a method at a telecommunications system or data communications system which makes possible signing and encryption of information which is transmitted between a transmitting equipment and a receiving equipment.

### PRIOR ART

The increased interest among the public in IT and especially Internet has resulted in that many companies och private persons want to carry on trade via Internet.

The problem that will arise when someone wants to sell anything via Internet is how payment communication and trade communication shall be made in a reliable and to unauthorized persons uninterpretable way.

Another situation of use where it is important with safe information transfer, where no unauthorized persons shall have possibility to acquaint themselves with the contents of transmitted information, is when certain persons/companies have authority to read certain programs or databases in a communications system (for instance Internet).

The problem above is solved by means of encryption of the information which is transmitted and verification of the identity of the users who are transmitting the information. The encryption and signing of today via Internet, however, is imperfect because there occur unneccessary communication of not encrypted information between processors and servers before the information is encrypted.

If one for instance today wants to sign and encrypt a document in Internet, where a web-server is run locally towards the client machine, the document is transmitted to the server where a CGI (Common Gateway Interface)-program performs signing/encryption.

After that a newly made page is transmitted from the CGI-program to the Web-browser (Web-reader) where one acknowledges the transmission of data from the machine.

In order to find out whether the prior art describes encryption and signing via Internet, a preliminary investigation was made, at which the following documents were found:

| | | | |
|---|---|---|---|
| Document | 1 | EP,A1, | 693 836 |
| | 2 | EP,A2, | 702 477 |
| | 3 | WO,A1, | 96/05681 |
| | 4 | WO,A1, | 93/15581 |
| | 5 | DE,A1, | 44 14 553 |
| | 6 | EP,A1, | 696 121 (abstract + figure) |

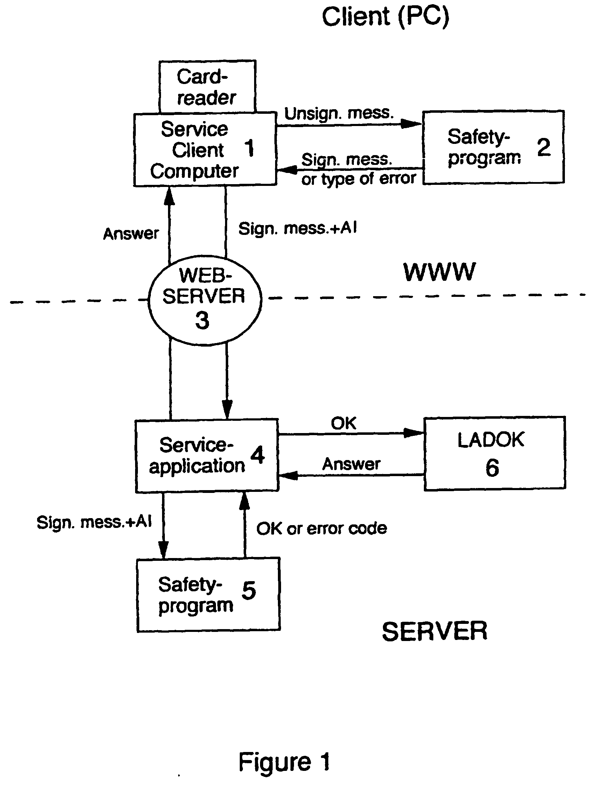

Document 1 relates to a method and equipment for managing of code keys at transmission of encrypted information over Internet. See especially "Summary of the invention", "Application of the present Invention to Site Firewalls" (column 13, Figure 6-10) and "User Authentication" (column 17) .
Document 2 relates to a system for automatic encryption and decryption of data packets transmitted between "sites" on Internet or other data networks. See especially "Abstract", "Description" (page 1) and "APPENDIX A" (page 8) .
Document 3 describes a device and a method for indentification and authentication at establishing of connection to local data networks via for instance Internet. The document does not deal with encrypted transmission. See especially "Abstract" and Figure 1 and 3 with belonging text.
Document 4 describes a method, device and arrangements for encrypted transmission of information between interconnected networks, preferably by means of the protocol TCP/IP. See "Abstract" and Figure 1 and 2 with belonging text.
Document 5 describes decermination of authenticity of subscribers equipment by means of TCP/IP. The document does not deal with encrypted transmission.

The above found documents are, however, marred by the same problem as has been described above regarding encryption and signing of document via Internet.

Further, IBM technical Disclosure Bulletin, Vol 39, No 10, October 1996, describes a system for Internet Image Statements, IIS. The description includes a sample interaction system, in which is described "normal" internet use of usernames and password. This document fails to teach anything about use of "smart cards".

Still further, Eric Bina et al (proceedings of the Third International Conference on Parallel and Distributed Information Systems, Austin, USA, September 1994, pages 99-102, "Secure Access to Data over the Internet") also describe a system that today is more or less a standard method for distributing sensitive information over the internet. This document also fails to teach the use of smart cards.

The document of Bina et al is considered as the most relevant prior art.

### SUMMARY OF THE INVENTION

The aim of the present invention consequently is to clear away above mentioned problem and provide a very safe communication via an information carrying network such as, for instance, Internet.

This aim is achieved by a device and method according to the features of independent Claims 1 and 3, respectively.

An advantage with this is chat all internal communication regarding the security on the local PC by that becomes needlesss, because all necessary processing of information is made in the plug-in unit or Java-unit; supporting programs executing as a part of the browser.

Another advantage is that all extra steps are concealed from the user and, if any intruders. If delicate information shall be processed, then the Java- or plug-in unit program can encrypt everything that is going out, and decrypt everything that is coming in automatically. No text en clair will be transmitted between processes, not even on the local computer.

Because it is a "living" program that is executed in the browser, there is possibility to do so much more than in an ordinary HTML-form.

The program also can communicate over the network in the background, for instance for monitoring processes.

### BRIEF DESCRIPTION OF THE DRAWING

In the following a more detailed description of the invention is given with reference to the only drawing.
Figure 1 describes schematically the verification procedure in the telecommunications system according to the present invention.

### DETAILED DESCRIPTION OF AN EMBODIMENT OF THE INVENTION

The aim with che present invention is, as has been mentioned above, to effect a way to sign documents or corresponding information electronically and to transmit and receive encrypted information over an information carrying communication network such as, for instance, Internet, and where said encryption respective signing shall be made by means of utilization of smart cards or by software which can cooperate with said network.

The aim above all is to make possible to transmit messages with personal signatures over Internet.

This of course can be used in a large number of different connections such as electronic banking, travel agencies, trade of different kinds or controlled access to databases which are made accessible via the network.

In this embodiment different services are described which are made accessible from KTH's (KTH = "Kungl. Tekniska Högskolan", i.e. "The Royal Institute of Technology") documentation system (LADOK) via Internet, provided that one has authorization to get access to these services.

Some abbreviations which will turn up continuously in the description now will be explained:
- CA: Certification Authority
- CGI: Common Gateway Interface
- LADOC: Local, ADP-based Documentation System; KTH's equivalent to Uppsala University's UPPDOK.
- MIME: Multipurpose Internet Mail Extensions
- NSAPI: Netscape Server Application Programming Interface
- URL: Uniform Resource Locator

The intention now will be described with reference to Figure 1.

The system according to the present invention consists of a computer 3, with a Web-server (called the server computer), one or more computers 1 with a WWW-browser and a card reader for smart cards. In addition all included computers 1 shall be connected to Internet. The client computer 1 includes a safety software 2.

Smart cards are personal cards with storage, processor, operative system etc. In these are the private key which is needed for signing and encryption and furthermore a certificate of X.509 standard. The certificate includes among other things the user's public key, CA's open key, information about the person etc. The card is an electronic identity document which in addition gives possibility to create personal electronic signatures which are unique to each person and card. The authenticity of the signature is possible to check by all levels which have access to the person's open key. This key can be obtained from a trusted authority on the network.

On the server side a service application 4 is conneced to the database LADOK 6, which service application includes a safety software 5.

The invention consequently implies to make services from LADOK accessible via Internet. Other services can, as has previously been mentioned, be arranged on the network with the same technology, for instance banking services, booking of journeys etc.

The service client 1 creates a signed message by an API-call to the safety software 2, where the message is given as parameters. The client 1 waits for answer which can be: signed message or type of error. If a signed message arrives at the client 1, this shall be packed into a structure and transmitted over the network (WWW) to the service application 4 via the Web-server 3 for that machine. The service application 4 disassembles the structure and transmits the user identity and the signed message to the safety software 5 for verification. The verification shall give OK or error code. If OK is received, the application 4 shall transmit the message and user identity to LADOK 6 for preparation, otherwise user identity and message shall be logged. The application 4 waits for answer from LADOK's 6 output or input process and returns this answer to the service client 1 via the network. The answer can be in ordinary text/html-form, or of some MIME-type, so a plug-in unit (not shown) can be started on the client side 1.

The answer shall include a description of how the work shall be possible to be extended for encryption in both directions.

In the started plug-in unit in the Web-browser at the server client 1 then all information which shall be transmitted to LADOK 6 is fed in, which information is encrypted directly in the plug-in unit. Signing of information/document is preferably made by a client utilizing an active card with personal code and a card reader connected to said plug-in unit. When encrypted information is coming in from LADOK 6 to the service client's computer 1, the information is decrypted in the plug-in unit.

If, however, a general software is made which supports HTML-form management and certain extensions, then customer adapted safety critical applications can be written with very small contribution of work. The client side gets one copy of the program (possibly automatically downloaded). The side which contains the extended form then starts the program to show the content. The program "parses" the extended HTML-form language and shows the content on the screen. When the user has made all the "feeding" and makes "submit", then all data is packed, signed and encrypted. No programming is needed for the clients and these moreover can use the same client software for a number of different applications.

On the server side there is a need of some programming, but with a Software Development Kit which has been developed (empty frame program), it is only the customer unique programming that needs to be added.

Extension implies that all communication over the network shall be encrypted.

The signatures shall be possible to be created by means of smart cards. If the deliveries of these cards are delayed, the signatures will, to begin with, be created in software.

In the following, preferred protocols and commands which are necessary to implement the embodiment will be discussed.

By network protocol is meant the protocol which is used between the Web-server and the Web-browser.

The service client 1 should transmit a tuple with the following appearance to the service application 4:
Application=SECUNET&Ver=versionnumber&... for instance
Application=SECUNET&Ver=1.00&Type=Sign&UserCert=...& Msg=...&Signature=...
where
- Version number is a serial number of the type (in pseudo C-code)
   ("%D.0%2D", major, minor).
- Type is a string which describes the type of the message, can be
   - Normal
   - Sign
   - Encrypt
   - Sign&Encrypt
   - .. other types
- The user certificate is the certificate from the smart card.
- The messsage should be a URL-encoded string of all information that exists in the INPUT-fields in the form.
- Signature should be a URL-encoded string of the signature.

To the version number there shall be a mapping which decides the number of fields and what each field contains. This makes it easier to make changes in the protocol. There shall be a mapping for each type of protocol. If the receiving application cannot manage the type of protocol, it shall return an error code, preferably in HTML-form.

If URL-encoding is used and the protocol looks as above, existing CGI-programs can be utilized as basis for server applications. All binary data which shall be transmitted should be URL-encoded before it is transmitted over the network. It should be realized that this applies to certificates, signatures and encrypted data.

The service client 1 shall extend the functionality of some type of WWW-browser making it manage signing, encryption, authentication and verification. As Netscape Navigator 2.0+ is expected to be widely spread, and as a lot of companies develop so called plug-in units for Navigator, that type of technology shall be used.

A plug-in unit shall be produced which can give possibility to read an input from the network (a URL), show it to a client, interact with the client, and finally transmit the result over the network, preferably in the same form as FORM (see the HTML-documentation) makes use of. The plug-in unit shall be associated with the MIME-type: application/x-secunet and file extensions:.secunet and .sec if these are not engaged.

Registration of MIME-types shall be made at Netscape by the agency of Telia Promotor.

The input which the plug-in unit is expected to read shall consist of a subset of HTML. This language should contain the following commands (with approximately correspondning semantics as at HTML):
<P>
<BR>
<HR>
<H1>...<H4>, </H1... </H4>
<A...>, </A>
<SELECT...>
<FORM...>, </FORM> and the following commands with extended semantics:
>INPUT...>

Input shall be able to take an extra parameter: EXTENDED. This parameter only need to have well-defined semantics about TYPE=SUBMIT when it indicates how the form shall be transmitted:
ENCRYPT
SIGN
SIGN and ENCRYPT
...possible future extensions

When corresponding button in the form is activated, suitable routines shall be called to process the indata which are in the form, before these are transmitted to the URL described in <FORM...>.

All options which exist to each HTML-command need not be implemented, but only those which are necessary to make communication, interaction with the user and signing to function.

The client shall be possible to be run under MS Windows 3.x and MS Windows 95/NT with Netscape Navigator. Which version that will be required on Navigator is to be determined by the application. Because Microsoft's Internet Explorer has launched the same API as there is in Netscape Navigator, the plug-in unit probably will function with that software as well, but this is no demand.

To make it possible to find out whether a message which is coming to the plug-in unit is an encrypted or a common message, the following protocol identifier (or corresponding) should be used:
<HTML>
or
<SECUNET VERSION=ver TYPE=type>
where "ver" indicates the version number of the protocol and "type" indicates the type of the message, which for instance is encrypted or is signed. Lack of protocol identifier should be interpreted as if the message is of the type normal.

This is only for the purposse of facilitating a future extension of the system.

The service application 4 shall function as a CGI- or NSAPI-program (or corresponding) which shall receive messages which the service client 1 transmits.

The version field shall be controlled in order to see whether the service application 4 can manage the protocol. If the version control fails, the program shall return an error code in HTML-form. In other case the type of the message shall be controlled in order to see if verification and/or decryption must be performed. Verification/decryption, if any, shall be performed, and if it succeeds, all parameters shall be transmitted to the product unique LADOK-code, otherwise the parameters, user identity, if any, and signature, if any, shall be logged. As person identifier shall be used civic registration number, if this is accessible on the smart card, in the certificate or in another safe place.

If there is no civic registration number on the card, authentication only can be made if there is a safe mapping between the certificates and the civic registration numbers, in for instance LADOK.

If the verification succeeds, it does not mean that the user is allowed to do what he/she likes in the system, but only that the identification is confirmed, so loggings, if any, of users who neglect their duties in LADOK must be made in the LADOK-system.

The following services shall be implemented:
- Show the five latest reported courses/moments. No inparameters. Returns at the most five courses (course code) and mark.
- Show status for a certain course. Inparameter course code, six characters. Returns mark for the course.
- Show sum of passed course points. No inparameters. Returns number of passed points, at the most four characters.
- Show certificate of studies to fax or printer. Inparameter fax number/printer number. Returns OK/error.

To the above it possibly can be necessary to include civic registration number. If a transaction code to map course code to course name is made accessible, the server will return course name instead of course code.

The code shall be possible to be run on machines with the operative systems UNIX or Windows NT and must not be depending on a special Web-server. However, it is sufficient if the system functions with a few different Web-servers (two or more). Parts of the code which are written uniquely for a certain operative system shall be documented separately to facilitate porting.

The application is programmed in such a way that it is easy to adapt the solution to new problems and should not be written uniquely for LADOK. Parts which are unique to LADOK shall be divided into own source codes to facilitate reuse of the parts in common.

What has been described above is only to be regarded as an advantageous embodiment of the invention, and the scope of protection of the invention is only defined by what is indicated in the following patent claims.

## Claims

1. Apparatus comprising a service client computer (1) with a WWW-browser adapted to be connected to a telecommunications system or a data communications system, the service client computer being adapted to sign and/or encrypt information to be transmitted and received by said service client computer (1), **characterized in that** said service client computer is adapted to execute a program for signing and encryption by means of at least one smart card, said program being linked together with a software adapted to show text, data entry fields, buttons and icons, and arranged to be utilized as a plug-in unit or a Java-unit in said WWW-browser, said plug-in unit or said Java-unit being arranged to decrypt/encrypt all information to/from said service client computer (1), wherein said service client computer (1) is connected to a card reader for identifying a user of said service client computer (1) by means of said at least one smart card together with a personal code, said at least one smart card including a private key for signing and encryption, and a certificate including a public key and personal data.

2. Apparatus (1) according to claim 1, **characterized in that** said service client computer (1) includes a safety software (2) for verification of said signature.

3. Method which utilizes a service client computer (1) with a WWW-browser connected to a telecommunications system or a data communications system for signing and encryption of information which is transmitted and received by said service client computer (1), **characterized by** said service client computer executing a program for signing and encryption by means of at least one smart card, said program being linked together with a software adapted to show text, data entry fields, buttons and icons, and utilized as a plug-in unit or a Java-unit in said WW-browser, said plug-in unit or said Java-unit decrypting/encrypting all information to/from said service client computer (1), wherein said service client computer (1) is connected to a card reader and identifies a user of said service client computer (1) by means of said at least one smart card together with a personal code, said at least one smart card including a private key for signing and encryption, and a certificate including a public key and personal data.

4. Method for verification of a user of the apparatus according to claim 1,
**characterized in that** it includes the steps that:
a) the user of the service client computer (1) creates a signed message by an API-call to the safety software (2), API standing for Application Programming Interface, where said message is given as parameter, at which the service client computer (1) receives an answer as "signed message" or "type of error";
b) if a signed message arrives at the service client computer (1) the message shall be packed into a structure and be transmitted over the WWW-network to a service application (4) via a Web-server (3) for the service client computer (1), but in case of "type of error", the message is logged;
c) the service application (4) disassembles the structure and transmits the user identity (AI) and the signed message to a safety software (5) for verification, at which the safety software (5) verifies the user or gives an error code;
d) when verified, the service application (4) transmits the message and user identity to the database (6) to which the service client (1) wants access; but in case of error code, the user identity and message are logged;
e) the service application (4) receives a verification answer from said database (6) and returns this answer to the service client computer (1) via the WWW-network;
f) the answer which said service client computer (1) receives is of a text/html-form or of MIME-type, MIME standing for Multipurpose Internet Mail Extensions, whereby said plug-in unit or Java-unit starts in said WWW-browser in the service client computer (1).

## Patentansprüche

1. Gerät mit einem Service-Client-Computer (1) mit einem WWW-Browser, der so ausgebildet ist, dass er an ein Telekommunikationssystem oder ein Datenkommunikationssystem angeschlossen werden kann, wobei der Service-Client-Computer so ausgebildet ist, dass er zu übertragende Information und vom Service-Client-Computer (1) empfangene Information bezeichnen und/oder verschlüsseln kann, **dadurch gekennzeichnet, dass** der Service-Client-Computer so ausgebildet ist, dass er ein Programm zum Bezeichnen und Verschlüsseln mittels wenigstens einer Smartcard durchführen kann, wobei das Programm mit einer Software verknüpft ist, die Text, Dateneingangsfelder, Buttoms und Icons zeigen kann, und so angeordnet ist, dass sie als eine Steckeinheit oder eine Java-Einheit im WWW-Browser verwendet werden kann, wobei die Steckeinheit oder die Java-Einheit angeordnet ist, um alle Information zum/vom Service-Client-Computer (1) zu entschlüsseln/verschlüsseln, wobei der Service-Client-Computer (1) mit einem Kartenleser zum Identifizieren eines Nutzers des Service-Client-Computers (1) mittels wenigstens einer Smartcard zusammen mit einem persönlichen Code verbunden ist, wobei die wenigstens eine Smartcard einen privaten Schlüssel enthält für das Bezeichnen und Verschlüsseln und ein Zertifikat, das einen öffentlichen Schlüssel und persönliche Daten enthält.

2. Gerät 1 nach Anspruch 1, **dadurch gekennzeichnet, dass** der Service-Client-Computer 1 eine Sicherheitssoftware (2) zur Verifizierung der Signatur enthält.

3. Verfahren, das einen Service-Client-Computer (1) mit einem WWW-Browser verwendet, der an ein Telekommunikationssystem oder ein Datenkommunikationssystem angeschlossen ist, um Information zu bezeichnen und zu verschlüsseln, die von dem Service-Client-Computer (1) übertragen und empfangen wird, **dadurch gekennzeichnet, dass** der Service-Client-Computer ein Programm zum Bezeichnen und Verschlüsseln mittels wenigstens einer Smartcard durchführt, wobei das Programm mit einer Software verknüpft ist, die so ausgebildet ist, dass sie Text, Dateneingabefelder, Buttoms und Icons zeigen kann und als eine Steckeinheit oder eine Java-Einheit in dem WWW-Browser verwendet wird, wobei die Steckeinheit oder die Java-Einheit alle Informationen zum/vom Service-Client-Computer (1) entschlüsselt/verschlüsselt, wobei der Service-Client-Computer (1) mit einem Kartenleser verbunden ist und einen Nutzer des Service-Client-Computers (1) mittels der wenigstens einen Smartcard zusammen mit einem persönlichen Code identifiziert, die wenigstens eine Smartcard mit einem privaten Schlüssel zum Unterzeichnen und Verschlüsseln und ein Zertifikat, das einen öffentlichen Schlüssel und persönliche Daten enthält, enthält.

4. Verfahren zur Verifizierung eines Nutzers des Gerätes gemäß Anspruch 1, **dadurch gekennzeichnet, dass** es die Schritte aufweist:
a) Erzeugen einer unterzeichneten Mitteilung durch einen API-Anruf an die Sicherheitssoftware (2) durch den Nutzer des Service-Client-Computers (1), wobei API für Application Programming Interface steht, wobei die Mitteilung als ein Parameter gegeben wird, bei dem der Service-Client-Computer (1) eine Antwort als "bezeichnete Mitteilung" oder "Fehlerart" empfängt;
b) Protokollieren der Mitteilung, wenn eine unterzeichnete Mitteilung am Service-Client-Computer (1) ankommt, dass die Mitteilung in eine Struktur gepackt werden soll und über das WWW-Netzwerk zu einer Service-Anwendung (4) über einen Web-Server (3) für den Service-Client-Computer (1) übertragen werden soll, aber für den Fall "Fehlerart";
c) die Serviceanwendung (4) zerlegt die Struktur und überträgt die Nutzeridentität (AI) und die bezeichnete Mitteilung an eine Sicherheitssoftware (5) zur Verifizierung, bei der die Sicherheitssoftware (5) den Nutzer verifiziert oder einen Fehlercode angibt;
d) bei Verifizierung überträgt die Service-Anwendung (4) die Mitteilung und die Nutzeridentität an die Datenbank (6), auf welche der Service-Client (1) zugreifen möchte; im Fall des Fehlercodes werden die Nutzeridentität und die Mitteilung jedoch protokolliert;
e) die Serviceanwendung (4) empfängt eine Verifikationsantwort von der Datenbank (6) und leitet diese Antwort über das WWW-Netz an den Service-Client-Computer (1) zurück;
f) die Antwort, welche der Service-Chent-Computer (1) empfängt, ist eine Text/html-Form oder vom MIME-Typ, wobei MIME für Multipurpose Internet Mail Extensions steht, wodurch die Steckeinheit oder die Java-Einheit in dem WWW-Browser in dem Service-Client-Computer (1) startet.

## Revendications

1. Appareil comprenant un ordinateur client de service (1) avec un programme de navigation WWW adapté pour être connecté à un système de télécommunications ou un système de transmission de données, l'ordinateur client de service étant adapté pour signer et/ou crypter des informations à émettre et à recevoir par ledit ordinateur client de service (1), **caractérisé en ce que** ledit ordinateur client de service est adapté pour exécuter un programme pour la signature et le cryptage au moyen d'au moins une carte à circuit intégré, ledit programme étant lié ensemble avec un logiciel adapté pour afficher du texte, des champs d'entrée de données, des boutons et des icônes, et disposé pour être utilisé comme unité plug-in ou unité Java dans ledit programme de navigation WWW, ladite unité plug-in ou ladite unité Java étant disposées pour décrypter/crypter toutes les informations à destination/provenant dudit ordinateur client de service (1), dans lequel ledit ordinateur client de service (1) est connecté à un lecteur de cartes pour identifier un utilisateur dudit ordinateur client de service (1) au moyen de ladite au moins une carte à circuit intégré conjointement avec un code personnel, ladite au moins une carte à circuit intégré comprenant une clé privée pour signature et cryptage, et un certificat comprenant une clé publique et de données personnelles.

2. Appareil (1) selon la revendication 1, **caractérisé en ce que** ledit ordinateur client de service (1) comprend un logiciel de sécurité (2) pour vérification de la dite signature.

3. Procédé qui utilise un ordinateur client de service (1) avec un programme de navigation WWW connecté à un système de télécommunications ou à un système de transmission de données pour la signature et le cryptage d'informations qui sont émises et reçues par ledit ordinateur client de service (1), **caractérisé en ce que** ledit ordinateur client de service, exécutant un programme pour la signature et le cryptage au moyen d'au moins une carte à circuit intégré, ledit programme étant lié ensemble avec un logiciel adapté pour afficher du texte, des champs d'entrée de données, des boutons et des icônes, et utilisé comme unité plug-in ou unité Java dans ledit programme de navigation WWW, ladite unité plug-in ou ladite unité Java décryptant/cryptant toutes les informations à destination/provenant dudit ordinateur client de service (1), dans lequel ledit ordinateur client de service (1) est connecté à un lecteur de cartes et identifie un utilisateur dudit ordinateur client de service (1) au moyen de ladite au moins une carte à circuit intégré conjointement avec un code personnel, ladite au moins une carte à circuit intégré comprenant une clé privée pour la signature et le cryptage, et un certificat comprenant une clé publique et des données personnelles.

4. Procédé pour la vérification d'un utilisateur de l'appareil selon la revendication 1,
**caractérisé en ce qu'**il comprend les étapes suivantes :
a) l'utilisateur de l'ordinateur client de service (1) crée un message signé par un appel API au logiciel de sécurité (2), API signifiant Application Programming Interface (Interface de programmation d'application), où ledit message est donné comme paramètre, auquel l'ordinateur client de service (1) reçoit une réponse comme « message signé » ou « type d'erreur » ;
b) si un message signé arrive à l'ordmateur client de service (1), le message sera comprimé en une structure et sera transmis sur le réseau WWW jusqu'à une application de service (4) via un serveur Web (3) pour l'ordinateur client de service (1), mais en cas de « type d'erreur », le message est consigné ;
c) l'application de service (4) démonte la structure et transmet l'identité de l'utilisateur (AI) et le message signé à un logiciel de sécurité (5) pour vérification, auquel le logiciel de sécurité (5) vérifie l'utilisateur et donne un code d'erreur ;
d) une fois cette vérification effectuée, l'application de service (4) transmet le message et l'identité de l'utilisateur à la base de données (6) à laquelle le client de service (1) veut accéder ; mais en cas de code d'erreur, l'identité de l'utilisateur et le message sont consignés ;
e) l'application de service (4) reçoit une réponse de vérification provenant de ladite base de données (6) et retourne cette réponse à l'ordinateur client de service (1) par le biais du réseau WWW ;
f) la réponse que l'ordinateur client de service (1) reçoit est sous forme de texte/html ou de type MIME, MIME signifiant Multipurpose Internet Mail Extensions, moyennant quoi ladite unité plug-in ou l'unité Java démarre dans ledit programme de navigation WWW dans l'ordinateur client de service (1).
